(19) Europäisches Patentamt
European Patent Office
Office européen des brevets

(11) **EP 3 056 378 A1**

(12) **EUROPÄISCHE PATENTANMELDUNG**

(43) Veröffentlichungstag:
**17.08.2016   Patentblatt 2016/33**

(51) Int Cl.:
**B60M 3/00** (2006.01)        **B61L 27/00** (2006.01)
**H02J 3/00** (2006.01)

(21) Anmeldenummer: **15154461.6**

(22) Anmeldetag: **10.02.2015**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**

(71) Anmelder: **Schweizerische Bundesbahnen SBB
3000 Bern (CH)**

(72) Erfinder: **Bosch, Julius
4600 Olten (CH)**

(74) Vertreter: **Rutz & Partner
Alpenstrasse 14,
Postfach 4627
6304 Zug (CH)**

(54)    **Verfahren zur Überwachung und Steuerung einer Betriebsvorrichtung**

(57)    Das Verfahren dient der Überwachung und der Steuerung einer Betriebsvorrichtung, insbesondere eines von einem Energieversorgungssystem gespeisten Eisenbahnnetzes, zur Prognose und Vermeidung oder Kompensation von Lastspitzen mit einem Lastrechner (RL), dem die Daten des Verlaufs der in der Betriebsvorrichtung auftretenden Gesamtlast (PG) zugeführt werden, und der daraus einzelne Verläufe von Lastkomponenten (PS0, PS1, PS2) ermittelt, die zur Bildung von Lastspitzen beitragen, die in der Betriebsvorrichtung auftreten, wonach

a) der zukünftige Verlauf (PS0E, PS1E, PS2E) für jede der Lastkomponenten (PS0, PS1, PS2) berechnet wird;

b) die für die Lastkomponenten (PS0, PS1, PS2) berechneten zukünftigen Verläufe (PS0E, PS1E, PS2E) einander überlagert werden, um einen zukünftigen Verlauf (PGE) der Gesamtlast (PG) zu ermitteln;

c) der zukünftige Verlauf (PGE) der Gesamtlast (PG) mit wenigstens einem Schwellwert (th1, th2) verglichen wird, um zukünftige Lastspitzen zu ermitteln, die den jeweiligen Schwellwert (th1, th2) überschreiten und

d) vor Eintreten der prognostizierten Lastspitzen einzelne Betriebseinheiten der Betriebsvorrichtung abgeschaltet oder in der Leistungsaufnahme reduziert oder mit einer zeitlichen Verschiebung betrieben werden, um die prognostizierten Lastspitzen zu vermeiden, oder dass das Energieversorgungssystem derart gesteuert wird, dass die für die Lastspitzen benötigte Energie bereitgestellt wird.

**Fig. 6a**

**(Forts. nächste Seite)**

**Fig. 6b**

$P_G$ (MW)

**Beschreibung**

Die Erfindung betrifft ein Verfahren zur Überwachung und Steuerung einer Betriebsvorrichtung, insbesondere eines Eisenbahnnetzes, und des damit verbundenen Energieversorgungssystems sowie eine nach diesem Verfahren arbeitende Betriebsvorrichtung, insbesondere ein Eisenbahnnetz.

In [1], J. Bosch, J.M. Aniceto, Potenziale für das Lastmanagement im Bahnenergiesystem, eb - Elektrische Bahnen, Ausgabe 2, 2013, ist beschrieben, dass die zeitliche Überlagerung von Traktionsleistungen in der Energieversorgung von Eisenbahnnetzen zu erheblichen Lastschwankungen führen kann. Zur Deckung dieser Lastspitzen ist die erforderliche Erzeugungsleistung, die durch die maximale Lastspitze und eine Reserve definiert wird, aus Kraftwerken gegebenenfalls über Frequenzumformer bereitzustellen. Die zukünftige Zunahme der Lastspitzen erfordert folglich Investitionen in den Ausbau des Energieversorgungssystems. Energie für Spitzenlasten, die durch schnell regelbare Spitzenlastkraftwerke bereitgestellt wird, ist zudem teurer, weshalb Lastspitzen durch ein geeignetes Lastmanagement vorzugsweise vermieden werden.

[2], J. Bosch, Frequenzkomponenten des Bahnstromlastgangs-Zusammenhänge mit dem Bahnbetrieb, eb - Elektrische Bahnen, Ausgabe 4, 2014, zeigt einen täglichen Verlauf der Gesamtlast des Bahnstromnetzes der Schweizerischen Bundesbahnen, der in den Zeitbereichen um 08:00 Uhr und 18:00 Uhr Lastspitzen aufweist. Weiter sind Frequenzkomponenten dies Lastverlaufs gezeigt, die durch eine Fourier-Transformation des Lastverlaufs ermittelt werden können. Es ist gezeigt, dass aufgrund des eingeführten Taktfahrplans signifikante Laständerungen mit einer Periodendauer von 1 Minute und 30 Minuten auftreten. Lastspitzen treten daher insbesondere an den Stellen auf, an denen die verschiedenen sich periodisch ändernden Laständerungen gleichzeitig einen Maximalwert aufweisen.

In [1] ist weiter beschrieben, dass zur Vermeidung von Lastspitzen nicht zwingend benötigte Lasten abgeschaltet werden, sodass der Bahnbetrieb weitergeführt werden kann. Dabei können Lastabschaltungen dezentral oder zentral gesteuert werden. Beim dezentralen Ansatz wird der lokale Leistungsbezug eines jeden Fahrzeuges optimiert, indem zu Zeiten hohen Traktionsleistungsbedarfs des betreffenden Fahrzeugs die Heizleistung für den Innenraum reduziert wird. Beim zentralen Ansatz werden die Lastspitzen zentral erkannt und Abschaltsignale an die Lasten gesendet. Damit könnten alle teilnehmenden Lasten gleichzeitig für das Lastmanagement verwendet werden. Zur Kommunikation können teilweise bereits vorhandene Kommunikationsstrecken erweitert und genutzt werden. Bei der zentralen Steuerung werden nicht zwingend benötigte Lasten zu Tageszeiten, in denen die Lastspitzen auftreten, abgeschaltet, z.B. von 7:00 Uhr bis 9:00 Uhr und von 14:00 Uhr bis 22:00 Uhr. Lastabschaltungen erfolgen daher über grössere Zeitperioden, in denen ein grösseres Lastaufkommen erwartet wird.

Bei der Abschaltung von Lasten, z.B. Heizsystemen, über eine längere Zeitdauer treten jedoch Komforteinbussen für Passagiere und gegebenenfalls Funktionsbeeinträchtigungen auf. Zudem ist es möglich, dass Lasten nicht notwendigerweise abgeschaltet werden, da sich im Nachhinein herausstellt, dass das Lastaufkommen geringer war als erwartet. Weiterhin können überraschenderweise vereinzelt Lastspitzen ausserhalb der Zeitbereiche auftreten, in denen die Lastabschaltung vorgesehen ist. Diese Lastspitzen werden durch das Lastmanagement daher nicht erfasst und können zu Instabilitäten im Stromversorgungsnetz führen.

Der vorliegenden Erfindung liegt daher die Aufgabe zugrunde, ein verbessertes Verfahren zur Überwachung und Steuerung einer Betriebsvorrichtung, insbesondere einer Vorrichtung zum Betrieb von Eisenbahnen bzw. eines Eisenbahnnetzes, und des damit verbundenen Energieversorgungssystems sowie eine entsprechende Betriebsvorrichtung, gegebenenfalls ein Eisenbahnnetz anzugeben, welches nach diesem Verfahren überwacht und gesteuert wird.

Mittels des Verfahrens sollen die Betriebsvorrichtung bzw. das Eisenbahnnetz sowie das zugehörige Energieversorgungsnetz derart steuerbar sein, dass Lastspitzen durch Abschaltung von Lasten gezielt vermieden oder durch Bereitstellung von Energie gezielt kompensiert werden können. Die erfindungsgemässe Betriebsvorrichtung, die ein Stromversorgungsnetz und damit gespeiste Betriebseinheiten aufweist, soll derart betrieben werden können, dass ein geglätteter Lastverlauf möglichst ohne Lastspitzen erreicht wird.

Eingriffe in die Betriebsvorrichtung bzw. das Eisenbahnnetz und/oder in das zugehörige Energieversorgungsnetz sollen präzise vollzogen werden können, sodass unnötige Lastabschaltungen, die den Komfort der Anwender bzw. Passagiere beeinträchtigen oder die Bereitstellung nicht benötigter Energiereserven, vermieden werden können. Hingegen sollen auch zu beliebigen Zeitpunkten sporadisch auftretende Lastspitzen erfasst werden können, sodass die Stabilität der Betriebsvorrichtung bzw. des Eisenbahnnetzes und die Stabilität des Energieversorgungsnetzes stets gewährleistet sind.

Mittels des erfindungsgemässen Verfahrens sollen insbesondere auch unvorhergesehene Veränderungen der Betriebsvorrichtung berücksichtigt werden können, die durch externe oder interne Einflüsse und Veränderungen verursacht werden, und gegebenenfalls unerwartete Lastspitzen verursachen.

Diese Aufgabe wird mit einem Verfahren und einer Vorrichtung gelöst, welche die in Anspruch 1 bzw. 13 angegebenen Merkmale aufweisen. Vorteilhafte Ausgestaltungen der Erfindung sind in weiteren Ansprüchen angegeben.

Das Verfahren dient der Überwachung und der Steuerung einer Betriebsvorrichtung, insbesondere eines von einem Energieversorgungssystem gespeisten Eisenbahnnetzes, zur Vermeidung oder Kompensation von Lastspitzen.

Insbesondere dient das Verfahren der Überwachung, Prognose und Steuerung des Leistungsbedarfs der Betriebsvorrichtung bzw. des Eisenbahnnetzes.

Dazu weist die Betriebsvorrichtung einen Lastrechner auf, dem die Daten des Verlaufs der in der Betriebsvorrichtung auftretenden Gesamtlast zugeführt werden. Der Lastrechner ermittelt aus dem Verlauf der Gesamtlast einzelne Verläufe von Lastkomponenten, die wesentlich zur Bildung von Lastspitzen beitragen, die in der Betriebsvorrichtung auftreten können.

Anhand der der in der Betriebsvorrichtung aufgetretenen und im Lastrechner registrierten Verläufe der Lastkomponenten werden die folgenden Verfahrensschritte durchgeführt;

　　a) für jede der Lastkomponenten wird deren zukünftiger Verlauf berechnet;

　　b) die für die Lastkomponenten berechneten zukünftigen Verläufe werden einander überlagert, um einen zukünftigen Verlauf der Gesamtlast zu ermitteln;

　　c) der zukünftige bzw. prognostizierte Verlauf der Gesamtlast wird mit wenigstens einem Schwellwert verglichen, um zukünftige Lastspitzen zu ermitteln, die den angewendeten Schwellwert überschreiten; und

　　d) vor Eintreten der prognostizierten Lastspitzen einzelne Betriebseinheiten der Betriebsvorrichtung abgeschaltet oder in der Leistungsaufnahme reduziert oder mit einer zeitlichen Verschiebung betrieben werden, um die prognostizierten Lastspitzen zu vermeiden, oder dass das Energieversorgungssystem derart gesteuert wird, dass die für die Lastspitzen benötigte Energie bereitgestellt wird.

Das erfindungsgemässe Verfahren erlaubt es somit, rechtzeitig vor dem Auftreten von Lastspitzen die erforderlichen Massnahmen zu treffen. Es ist somit nicht erforderlich, Lasten über grössere Zeitbereiche abzuschalten, in denen innerhalb des Eisenbahnnetzes typischerweise grössere Verkehrsaufkommen und dadurch höhere Belastungen auftreten.

Stattdessen können Zeitabschnitte, in denen Lastspitzen auftreten, präzise prognostiziert und entsprechende Massnahmen zur Vermeidung der Lastspitzen oder zur Bereitstellung der dafür benötigten Energie zeitgenau eingeleitet werden. Dadurch können unnötige Abschaltungen vermieden werden, die stets einen Eingriff in ein funktionierendes System bedeuten und grundsätzlich unerwünscht sind. Die Eingriffe in die Betriebsvorrichtung bzw. in das Eisenbahnnetz werden daher auf ein Minimum reduziert, weshalb Einbussen an Funktionalität und Komfort ebenfalls auf ein Minimum reduziert werden.

Sofern Heizungen in Eisenbahnzügen kurzzeitig, z.B. für wenige Minuten ganz oder teilweise abgeschaltet werden, so wird dies durch die Passagiere in den Eisenbahnzügen kaum wahrgenommen. Durch die präzisere Lokalisierung und Eingrenzung der Lastspitzen können somit auch Betriebseinheiten, wie Heizungen von Fahrzeugen oder Gebäuden, abgeschaltet werden, deren Abschaltung bisher nicht in Betracht gezogen wurde, da eine längere Abschaltung durch die Betriebsvorrichtung selbst oder durch die Anwender nicht toleriert wurde. Aufgrund zeitlich kürzerer Eingriffe ergeben sich auch kaum funktionelle Einschränkungen oder gar Störungen. Aufgrund präziser Eingriffe in die Betriebsvorrichtung steht demnach eine grössere Anzahl von Betriebseinheiten für das Lastmanagement zur Verfügung.

Durch die präzisere Erfassung der Lastspitzen erlaubt das erfindungsgemässe Verfahren somit, gezielter und wirkungsvoller einzugreifen. Bei hohen Lastspitzen kann eine grössere Anzahl von Betriebseinheiten abgeschaltet werden, ohne dass Betriebsbeeinträchtigungen oder Komforteinbussen auftreten.

Das erfindungsgemässe Verfahren erlaubt es zudem, besonders vorteilhaft in die Betriebsvorrichtung einzugreifen und auf Lastabschaltungen zu verzichten. Stattdessen werden die erfindungsgemäss gewonnenen Erkenntnisse über die periodisch auftretenden Lastkomponenten zur zeitlich verschobenen Steuerung der Betriebseinheiten verwendet.

Dabei können zwei verschiedene wirkungsvolle Massnahmen zur Vermeidung der Lastspitzen angewendet werden, die von den Nutzern der Betriebsvorrichtung bzw. des Eisenbahnnetzes kaum wahrgenommen werden.

Mit einer ersten Massnahme wird eine gegenseitige Verschiebung der periodischen Verläufe von zwei oder mehreren Lastkomponenten vorgenommen, sodass sich diese in Zeitbereichen, für die Lastspitzen prognostiziert wurden, derart überlagern, dass eine minimale Last resultiert. D.h., im Bereich der Lastspitzen sollen die periodischen Verläufe der signifikanten Lastkomponenten ein Wellental aufweisen. Durch die Verschiebung der Verläufe der signifikanten Lastkomponenten gelingt es somit, Lastspitzen zu vermeiden, ohne den Betrieb wesentlich zu beeinträchtigen. In einem Eisenbahnnetz wird die Abfahrt ausgewählter, gegebenenfalls gruppierter Fahrzeuge vorverschoben oder nachverschoben, um leistungsintensive Anfahrten innerhalb der Lastspitzen zu vermeiden. Dabei kann eine Priorisierung der Betriebseinheiten vorgesehen werden. Z.B. werden die Abfahrten von Güterzügen um grössere Zeitabstände verschoben, als die Abfahrten von Personenzügen.

Mit einer zweiten Massnahme werden die Betriebstakte der Betriebsvorrichtung bzw. der Fahrplantakt des Eisenbahnnetzes in den Zeitbereichen, in denen Lastspitzen prognostiziert wurden, zumindest teilweise aufgehoben. Dazu werden zu einer periodischen Lastkomponente korrespondierende Betriebseinheiten mit einer gegenseitigen zeitlichen Verschiebung betrieben. Z.B. werden ausgewählte Fahrzeuge des Eisenbahnnetzes, die im Viertelstundentakt verkehren, verteilt über einige Minuten in Gang gesetzt. Auch in diesem Fall kann eine Priorisierung der Betriebseinheiten erfolgen.

Bei beiden Massnahmen können Fahrzeuge nach Fahrzeitreserve oder Besetzungsgrad beziehungsweise Auslastung der Fahrzeuge priorisiert werden und so mehr oder weniger taktgenau betrieben werden. Fahrzeuge mit hohem Besetzungsgrad werden vorzugsweise priorisiert. Fahrzeuge, die Strecken befahren, in denen ausreichend Fahrzeitreserve vorhanden ist, werden hingegen mit tieferer Priorität betrieben, da verzögerte Abfahrten bis zur nächsten Haltestelle wieder aufgeholt werden können. Somit ergeben sich keine oder nur minime Auswirkungen auf die Passagierpünktlichkeit und die Fahrplanstabilität.

Die beiden beschriebenen Massnahmen, sowie Massnahmen zur Lastreduktion oder Lastabschaltung von Betriebseinheiten werden vorzugsweise derart gemischt, dass im Bereich der Lastspitzen jeweils die erforderliche Lastreduktion resultiert.

Betriebseinheiten sind vorzugsweise stationäre oder mobile Funktionseinheiten der Betriebsvorrichtung bzw. des Eisenbahnnetzes, die mit elektrischem Strom versorgt werden. In einem Eisenbahnnetz sind z.B. Weichenheizungen stationäre Betriebseinheiten. Lokomotiven gehören hingegen zu den mobilen Betriebseinheiten. Betriebseinheiten können auch nach deren Bedeutung für die Betriebsvorrichtung geordnet werden. Betriebseinheiten, die ohne Unterbruch für die Betriebsvorrichtung zur Verfügung stehen müssen, werden einer ersten Gruppe zugeteilt. Für diese Gruppe, die z.B. sicherheitsrelevante Betriebseinheiten, wie Stellwerke, umfasst, wird eine Abschaltung generell ausgeschlossen.

Einer zweiten Gruppe werden Betriebseinheiten zugeordnet, die für den Betrieb der Betriebsvorrichtung bzw. des Eisenbahnnetzes zwingend erforderlich sind, für die aber eine kurze Abschaltung nicht ausgeschlossen ist. Z.B. können Lokomotiven für eine kurze Zeit, z.B. 1 Minute abgeschaltet werden. Zusätzlich kann zwischen Lokomotiven von Personenzügen und Güterzügen unterschieden werden, die unter Umständen nicht mit gleicher Priorität betrieben werden müssen. In eine weitere Gruppe gehören Heizungen, insbesondere Weichenheizungen, die für eine längere Zeit, z.B. 5 bis 15 Minuten ausser Betrieb gesetzt werden können. In eine letzte Gruppe gehören Betriebseinheiten, die in keinem direkten funktionalen Zusammenhang mit dem Betriebsablauf oder Prozessverlauf der Betriebsvorrichtung stehen und im Wesentlichen eine Komfortfunktion aufweisen. Z.B. können Gebäudeheizungen, Fahrzeugheizungen oder Beleuchtungen zumindest teilweise abgeschaltet werden, ohne dass der Betrieb des Eisenbahnnetzes beeinträchtigt wird.

Für jede Betriebsvorrichtung, die mittels des erfindungsgemässen Verfahrens gesteuert wird, werden daher vorzugsweise alle wesentlichen Betriebseinheiten oder Netzeinheiten in einer Liste gruppiert und priorisiert. Die Ansteuerung der Betriebseinheiten kann durch den Lastrechner erfolgen. Vorzugsweise ist der Lastrechner mit einem Betriebsrechner verbunden, welcher Zugriff auf die relevanten Betriebseinheiten hat. Vom Lastrechner werden dem Betriebsrechner die Lastspitzen gemeldet, der entsprechende Massnahmen ergreift und ausgewählte Lasten bzw. Betriebseinheiten in der Leistungsaufnahme beschränken, abschalten oder mit einer zeitlichen Verschiebung betreiben kann, um die Lastspitzen zu vermeiden.

Der Lastrechner meldet dem Betriebsrechner vorzugsweise die Höhe und die Dauer der Lastspitzen. Z.B. meldet der Lastrechner, dass zwischen 18:05 Uhr und 18:10 Uhr eine Lastspitze von 25 MW auftritt. In der Folge wird der Betriebsrechner zwischen 18:05 Uhr und 18:10 Uhr Betriebseinheiten in der Leistungsaufnahme beschränken, abschalten oder deren Betrieb zeitlich vor oder nach verschieben, damit innerhalb dieses Zeitintervalls rund 25 MW Leistung weniger bezogen wird.

Damit der zu Verlauf der Gesamtlast für einen Tag möglichst präzise prognostiziert werden kann, werden vorzugsweise alle historisch relevanten Daten, einschliesslich der Rahmenbedingungen, d.h. der inneren und äusseren Einflüsse und Gegebenheiten, wie der Witterung und der Temperaturen, aufgezeichnet. Durch die wiederholte Aufzeichnung der Lastverläufe über mehrere Tage und die Ermittlung der durchschnittlichen Werte kann ein gemittelter Gesamtlastverlauf bestimmt werden, in dem alle charakteristischen Merkmale des täglichen Lastverlaufs hervortreten und sporadische Abweichungen unterdrückt oder reduziert werden. Vorzugsweise werden Lastverläufe je für einen Wochentag aufgezeichnet und gemittelt, sodass Betriebsunterschiede, z.B. Fahrplanunterschiede während den Wochentagen den prognostizierten Gesamtlastverlauf nicht beeinflussen. Ebenso werden die Lastverläufe für Feiertage individuell aufgezeichnet. Ferner werden Aufzeichnungen vorzugsweise unter Berücksichtigung der Rahmenbedingungen gruppiert, sodass Lastverläufe z.B. für unterschiedliche Witterungsverhältnisse und Temperaturen gruppiert vorliegen.

Vorzugsweise können äussere Einflüsse auch durch eine Näherung einer Funktion abgebildet werden und somit anstatt einer Gruppierung eine mathematische Funktion zur Prognose des Einflusses (z.B. der Temperatureinfluss auf PS0E) auf die Last verwendet werden. Bei der Wahl der Funktion (z.B. Gerade, Parabel) kann vorteilhaft Vorwissen aus Betriebserfahrung oder einer vorangegangenen physikalischen Modellierung eingesetzt werden.

Zur Ermittlung der Lastkomponenten innerhalb des Verlaufs der Gesamtlast, gegebenenfalls des gemittelten Gesamtlastverlaufs, werden der Verlauf der Grundlast sowie rekursiv oder periodisch auftretende Signalanteile ermittelt. Die periodisch auftretenden Signalanteile werden vorzugsweise mittels einer Fourier-Transformation aus dem gegebenenfalls gemittelten Gesamtlastverlauf extrahiert.

Der Verlauf der Grundlast ist der gleitende Mittelwert der Gesamtlast, der durch Glättung von Zeit- und Datenreihen bzw. durch das Entfernen der höheren Frequenzanteile gebildet wird. Der gleitende Mittelwert resultiert z.B. aus der Anwendung eines Tiefpassfilters mit endlicher Impulsantwort (FIR-Filter).

Rekursive oder aperiodische Vorgänge in der Betriebsvorrichtung, die innerhalb eines Tages nur einmal oder mehrmals auftreten, können mit Gewohnheiten des Betreibers der Betriebsvorrichtung zusammenhängen, der z.B. kurz vor Arbeitsbeginn die Gebäude beleuchtet und mit Heizenergie versorgt. Vorzugsweise werden auch solche Lastvorgänge berücksichtigt.

Periodische Vorgänge sind von vorrangiger Bedeutung, falls die Betriebsabläufe in der Betriebsvorrichtung getaktet sind. In einem Eisenbahnnetz, welches nach einem Taktfahrplan arbeitet, werden die Züge z.B. mit einem Takt von n Minuten (z.B. 15, 30 oder 60 Minuten) betrieben. Bei der gemeinsamen Abfahrt von Zügen treten daher periodisch hohe Lasten auf.

Vorzugsweise wird auch die Höhe des Rauschanteils der Lastkomponente bzw. des Lastrauschens ermittelt, welches durch zufälliges Einschalten und Abschalten von Betriebseinheiten innerhalb der Betriebsvorrichtung verursacht wird. Das Lastrauschen kann dabei einen erheblichen Einfluss auf die Gesamtlast und die Lastspitzen haben und kann somit ebenfalls zu Instabilitäten im Stromnetz der Betriebsvorrichtung führen.

Vorzugsweise werden Daten interner Einflüsse auf den Verlauf der Gesamtlast, wie Zustandsdaten der Betriebsvorrichtung, Störungsmeldungen, Fahrplandaten und Fahrplanänderungen, ausgewertet und entsprechende Belastungsänderungen ermittelt und bei der Bestimmung des zukünftigen Verlaufs der Gesamtlast berücksichtigt. Beim Auftreten von Störungen werden normalerweise zahlreiche Lasten ausgeschaltet bzw. Fahrzeuge ausser Betrieb gesetzt. Nach Beseitigung der Störung werden die Lasten wieder zugeschaltet bzw. die Fahrzeuge wieder in Betrieb gesetzt, weshalb für eine kurze Zeitperiode mit einer hohen Gesamtlast zu rechnen ist. Ebenso führen Fahrplanänderungen zu Änderungen im Lastverlauf.

In einer weiteren vorzugsweisen Ausgestaltung werden Daten externer Einflüsse auf den Verlauf der Gesamtlast ausgewertet und entsprechende Belastungsänderungen berechnet und bei der Bestimmung des zukünftigen Verlaufs der Gesamtlast berücksichtigt. Klimatische Einwirkungen haben einen erheblichen Einfluss auf die Belastung eines Eisenbahnnetzes. Bei Temperaturen unter dem Gefrierpunkt werden Weichenheizungen eingesetzt. Mittels Wetterstationen mit Temperatursensoren werden die Witterungs- und Temperaturverhältnisse gemessen. Gestützt auf die gemessenen Daten erfolgt die automatische Ein- bzw. Abschaltung der Energiezufuhr lokal oder über Fernwirksysteme bzw. übergeordnete Leitsysteme.

Aufgrund von Witterungseinflüssen oder Störungen in der Betriebsvorrichtung können Phasenverschiebungen bei den periodisch verlaufenden Lastkomponenten auftreten. Bei Schneefall oder technischen Störungen im Bahnnetz ist es möglich, dass sich die Abfahrten der Züge verzögern, wodurch Abweichungen vom Fahrplantakt und somit auch von den prognostizierten Verläufen der Gesamtlast auftreten. Vom Lastrechner wird daher vorzugsweise stets der aktuelle Verlauf der Gesamtlast ausgewertet, um die aktuellen Verläufe der Lastkomponenten zu ermitteln, die mit den zuvor ermittelten zukünftigen Verläufen der Lastkomponenten verglichen werden. Sofern Abweichungen festgestellt werden, werden die zuvor ermittelten Verläufe der Lastkomponenten korrigiert und dann wieder einander überlagert, um den zukünftigen Verlauf der Gesamtlast zu ermitteln. Auf diese Weise gelingt es, den prognostizierten Verlauf der Gesamtlast an die äusseren Einflüsse anzupassen. Der Lastrechner arbeitet daher vorzugsweise mit zahlreichen Erfahrungswerten bzw. früher registrierten Lastverläufen und Rahmenbedingungen sowie mit aktuell ermittelten Daten.

Vorzugsweise wird auch die Höhe des Rauschanteils des aktuellen Lastverlaufs ermittelt und der zukünftige Verlauf der Gesamtlast entsprechend angepasst, falls ein verändertes Lastrauschen festgestellt wird.

Änderungen des prognostizierten Verlaufs der Gesamtlast erfolgen vorzugsweise in beide Richtungen. Vorzugsweise werden bei der Korrektur des prognostizierten Verlaufs der Gesamtlast auch die Schwellwerte angepasst, sodass auftretende Lastspitzen weiterhin präzise detektiert werden können.

Lastspitzen sind unabhängig von der jeweiligen Belastung des Stromnetzes unerwünscht. Sofern die Gesamtlast über einige Stunden auf einem tiefen Niveau, z.B. bei der Hälfte des Lastmaximums verläuft, ist auch in diesem Bereich die Bereitstellung von Energiereserven mit höherem Aufwand und Kosten verbunden. Vorzugsweise wird daher für zwei oder mehrere Bereiche des zukünftigen Verlaufs der Gesamtlast je ein Schwellwert vorgesehen, um zukünftige Lastspitzen zu detektieren, die den jeweiligen Schwellwert überschreiten.

Vorzugsweise wird ein variabler oder adaptiver Schwellwert bzw. Schwellwertverlauf verwendet, der an den Verlauf der Grundlast angepasst und davon um einen Offset beabstandet ist. Dieser an den Verlauf der Grundlast adaptierte Schwellwertverlauf erlaubt es, alle Abweichungen von der Grundlast zu detektieren. Dadurch wird es möglich, auch periodisch von der Grundlast abweichende Lastbäuche zu ermitteln und zu kompensieren. Das erfindungsgemässe Verfahren erlaubt es somit, nicht nur Lastspitzen, sondern auch die normale Lastwelligkeit durch eine Laststeuerung zu kompensieren. Der Verlauf der Gesamtlast kann dadurch geglättet werden, wodurch sowohl die Betriebsvorrichtung, als auch das Energieversorgungssystem weiter stabilisiert werden können. Durch die Laststabilisierung in der Betriebsvorrichtung resultiert auch eine reduzierte Belastung des Energieversorgungssystems, welches ebenfalls, jedoch auf einer höheren Ebene, mit Lastspitzen konfrontiert ist. Z.B. ist das Energieversorgungssystem mit zahlreichen Betriebsvorrichtungen verbunden. Falls diese Betriebsvorrichtungen je mit dem erfindungsgemässen Verfahren gesteuert werden, so wird die Welligkeit des Energiebedarfs beim Energieversorgungssystem deutlich reduziert.

Für das Auftreten von prognostizierten Lastspitzen, welche den zugehörigen Schwellwert überschreiten, werden Steuersignale mit einer Vorlaufzeit erzeugt, die es erlaubt, vor Auftreten der Lastspitzen ausgewählte Betriebseinheiten der Betriebsvorrichtung in der Leistungsaufnahme zu beschränken, abzuschalten oder mit einer zeitlichen Verschiebung zu betreiben, um die prognostizierten Lastspitzen zu vermeiden, oder das Energieversorgungssystem derart zu steuern, dass die für die Lastspitzen benötigte Energie bei Eintreten der Lastspitzen bereit steht.

Zur Durchführung des Verfahrens ist der Lastrechner RL mit einem Programm versehen, mittels dessen die Betriebsvorrichtung nach dem erfindungsgemässen Verfahren überwacht und gesteuert werden kann.

Der Lastrechner ist ferner über Datenkanäle mit einem Betriebsrechner verbunden, mittels dessen ausgewählte Betriebseinheiten der Betriebsvorrichtung steuerbar sind. Vom Betriebsrechner können dem Lastrechner zusätzlich aktuelle Daten der aufgetretenen Belastungen und der aufgetretenen internen und externen Einflüsse mitgeteilt werden, die den Lastverlauf beeinflussen. Der Betriebsrechner überwacht zudem vorzugsweise den Zustand der abgeschalteten Betriebseinheiten, z.B. um diese wieder zu aktivieren, falls dies notwendig ist.

Vorzugsweise ist der Lastrechner auch mit einem Energierechner verbunden, mittels dessen das Energieversorgungssystem steuerbar ist. Dem Energierechner kann mitgeteilt werden, dass aufgrund von Lastspitzen ein höherer Energiebedarf auftreten wird. Ferner kann die Dauer und die Höhe des zusätzlichen Energiebedarfs angegeben werden. Der Energierechner kann zurückmelden, dass der zusätzliche Energiebedarf bereitgestellt wird oder nicht, sodass stattdessen eine Lastabschaltung, Lastreduktion, Betriebsverschiebung rechtzeitig durch den Betriebsrechner durchgeführt werden kann.

Ferner ist der Lastrechner über Datenkanäle vorzugsweise mit einem Planungsrechner verbunden, aus dem Daten, insbesondere Fahrplandaten, für den zukünftigen Betrieb der Betriebsvorrichtung abrufbar sind. Für Fahrplanänderungen wird der Lastrechner die täglichen Lastverläufe neu aufnehmen, um zukünftige Lastspitzen ermitteln zu können.

Der Lastrechner bzw. dessen Programm wird daher laufend an die Betriebsvorrichtung bzw. das Eisenbahnnetz angepasst, um zukünftige Lastverläufe präzise prognostizieren zu können.

Um grössere Betriebsvorrichtungen bzw. grössere Eisenbahnnetze präzise steuern zu können, werden diese vorzugsweise segmentiert. Z.B. wird das Eisenbahnnetz in möglichst homogene Netzsegmente aufgeteilt. Vorzugsweise wird vorgesehen, dass in jedem Netzsegment eine minimale Anzahl von Streckenunterbrüchen auftritt. Dadurch werden die Netzelemente hinsichtlich auftretender Störungen gegeneinander isoliert. Eine Störung in einem Netzsegment hat dabei keine oder nur eine reduzierte Auswirkung auf ein benachbartes Netzsegment. Das erfindungsgemässe Verfahren kann daher individuell auf jedes einzelne Netzsegment oder auch auf das gesamte Bahnnetz angewendet werden.

Nachfolgend wird die Erfindung anhand von Zeichnungen näher erläutert. Dabei zeigt:

Fig. 1 exemplarisch einen Verlauf der Gesamtlast PG in einer Betriebsvorrichtung bzw. in einem Eisenbahnnetz über 24 Stunden mit höheren Belastungen und Lastspitzen in den Zeitbereichen um 08:00 Uhr und 18:00 Uhr;

Fig. 2 die Überlagerung PGG der während mehreren Tagen aufgenommenen Verläufe der Gesamtlast PG in einem Eisenbahnnetz im Zeitbereich und nach der Fourier-Transformation im Frequenzbereich;

Fig. 3a die aus der Fourier-Transformation resultierenden Frequenzanteile oder Lastschwingungen mit Angabe der Amplituden, der Frequenz und der Periodendauer für Frequenzen bis 2 mHz;

Fig. 3b die aus der Fourier-Transformation resultierenden Frequenzanteile oder Lastschwingungen mit Angabe der Amplituden, der Frequenz und der Periodendauer für Frequenzen über 2 mHz;

Fig. 4a den gegebenenfalls gemittelten Verlauf einer Gesamtlast PG, PGG über 24 Stunden;

Fig. 4b den aus dem Verlauf der Gesamtlast PG, PGG von Fig. 4a extrahierten Verlauf der Grundlast PS0 über 24 Stunden nach Abtrennung periodischer Signalanteile und des Lastrauschens;

Fig. 4c den aus dem Verlauf der Gesamtlast PG, PGG von Fig. 4a extrahierten Verlauf einer ersten Lastschwingung PS1 über 24 Stunden, die eine Periodendauer von 30 Minuten aufweist;

Fig. 4d die Hüllkurve einer aus dem Verlauf der Gesamtlast PG, PGG von Fig. 4a extrahierten zweiten Lastschwingung PS2 über 24 Stunden, die eine Periodendauer von 1 Minute aufweist, mit einer Detaildarstellung dieser Lastschwingung PS2 im Zeitbereich zwischen 10:00 Uhr und 10:15 Uhr;

Fig. 4e den aus dem Verlauf der Gesamtlast PG, PGG von Fig. 4a extrahierten Verlauf des Lastrauschens PR über 24 Stunden;

Fig. 5a einen für 24 Stunden prognostizierten Verlauf der Grundlast PS0E ohne die Verläufe der für die nächsten 24 Stunden erwarteten höherfrequenten Lastschwingungen PS1E, PS2E und des Lastrauschens PRE, die separat dargestellt sind;

Fig. 5b die Überlagerung des prognostizierten Verlaufs der Grundlast PS0E und der prognostizierten höherfrequenten Lastschwingungen PS1E, PS2E sowie des prognostizierten Lastrauschens PRE, welche den prognostizierten Verlauf der Gesamtlast PGE bildet;

Fig. 6a das Eisenbahnnetz BN, aus dem Lastdaten einem Lastrechner RL zugeführt werden, der mit einem Betriebsrechner RBN, einem Planungsrechner RP und einem Energierechner REN Daten austauscht; und

Fig. 6b den aktuellen Verlauf der Gesamtlast des Eisenbahnnetzes BN bis etwa 10:30 Uhr, aus dem die aktuellen Phasenlagen und/oder Amplituden oder Werte der Grundlast PS0 gemäss Fig. 4b, der Lastschwingungen PS1, PS2 gemäss Fig. 4c und Fig. 4d sowie die Amplitude oder Leistung des Lastrauschens PR gemäss Fig. 4e ermittelt werden, um Korrekturmassnahmen einleiten zu können.

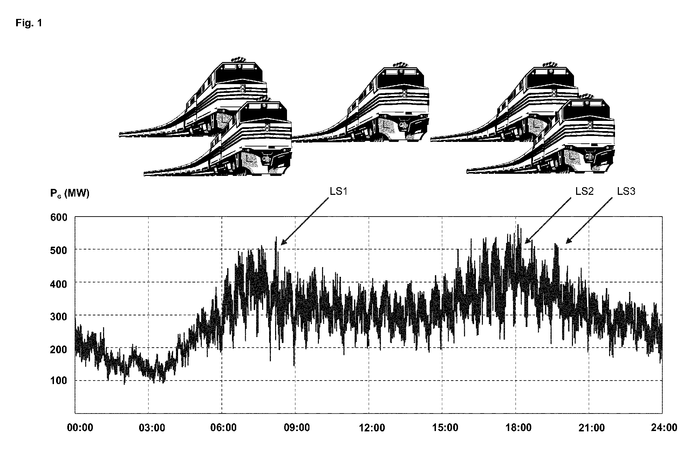

Fig. 1 zeigt in einem Diagramm exemplarisch den Lastverlauf der Gesamtlast PG in einer Betriebsvorrichtung bzw. in einem Eisenbahnnetz über 24 Stunden. Es ist ersichtlich, dass in den Zeitbereichen um 08:00 Uhr und um 18:00 Uhr mehr Züge verkehren und dadurch höhere Belastungen im Eisenbahnnetz auftreten. Um 08:00 Uhr werden Belastungen von bis zu 500 MW und um 18:00 Uhr Belastungen bis zu 550 MW registriert. Dazwischen sinkt die Belastung auf unter 400 MW. Eine nähere Betrachtung des Diagramms zeigt, dass nicht die durchschnittlichen Schwankungen des Gesamtlastverlaufs PG, die bisher für die Lastregelung hinzugezogen wurde, sondern auftretende Lastspitzen ein zentrales Problem darstellen. Exemplarisch wird auf die Lastspitzen LS1 etwa um 08:15 Uhr, LS2 etwa um 18:10 Uhr und LS3 etwa um 20:00 Uhr verwiesen, die besonders signifikant sind. Bei der Lastspitze LS1 tritt innerhalb kurzer Zeit ein Lastanstieg bzw. ein Anstieg des Energiebedarfs um etwa 66 % von etwa 300 MW bis 500 MW auf. Diesen hohen Belastungen wurde bisher mit Lastabschaltungen über eine längere Zeitdauer begegnet. Zu beachten ist, dass Lastspitzen kurzzeitig auch ausserhalb der erhöhten Lastbereiche auftreten können. Würde man angesichts des Lastverlaufs darauf schliessen, dass ein maximaler Energiebedarf je um 08:00 Uhr und um 18:00 Uhr auftritt, so würde die kurze aber intensive Lastspitze LS3 um 20:00 Uhr vernachlässigt.

Zu beachten ist ferner, dass die durchschnittlichen Belastungen im Zeitbereich um 18:00 Uhr höher sind als um 8:00 Uhr. Für die Behandlung der Lastspitzen LS1 bzw. LS2 in diesen Zeitbereichen werden daher vorzugsweise unterschiedliche Massnahmen vorgesehen.

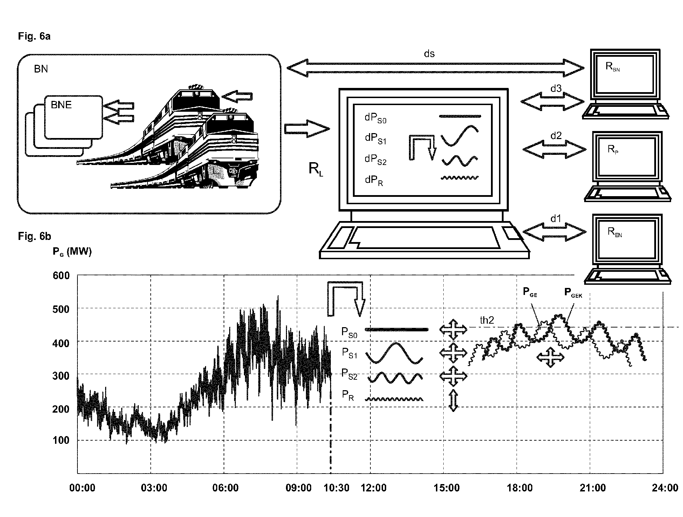

Nach dem erfindungsgemässen Verfahren wird zur Vermeidung oder zur Kompensation von Lastspitzen ein Lastrechner RL (siehe Fig. 6a) verwendet, der mit einem Lastmanagementprogramm ausgestattet ist. Dem Lastrechner RL werden z.B. vom Betriebsrechner RB der Betriebsvorrichtung bzw. des Eisenbahnnetzes oder von einem Energierechner REN des Energieversorgungssystems (siehe Fig. 6a) die Daten des Verlaufs der in der Betriebsvorrichtung bzw. im Eisenbahnnetz gemessenen Gesamtlast PG zugeführt. Im Lastrechner RL können ferner gemeldete Teillasten z.B. Lasten von Netzsegmenten summiert werden, um die Gesamtlast PG zu ermitteln.

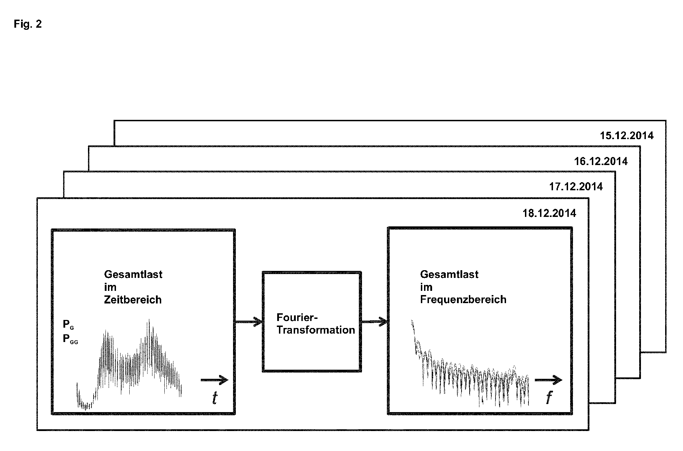

Fig. 2 zeigt, dass die Lastverläufe vorzugsweise über mehrere Tage (im Beispiel vom 15.12.2014 bis zum 18.12.2014) summiert und gemittelt werden, um charakteristische Muster des Lastverlaufs deutlich hervortreten zu lassen. Für einen einzelnen Tag resultiert ein einzelner Verlauf der Gesamtlast PG. Für die über mehrere Tage aufgezeichneten täglichen Verläufe der Gesamtlast PG wird ein gemittelter Gesamtlastverlauf PGG gebildet, der eine zuverlässigere Prognose zukünftiger Lastverläufe erlaubt.

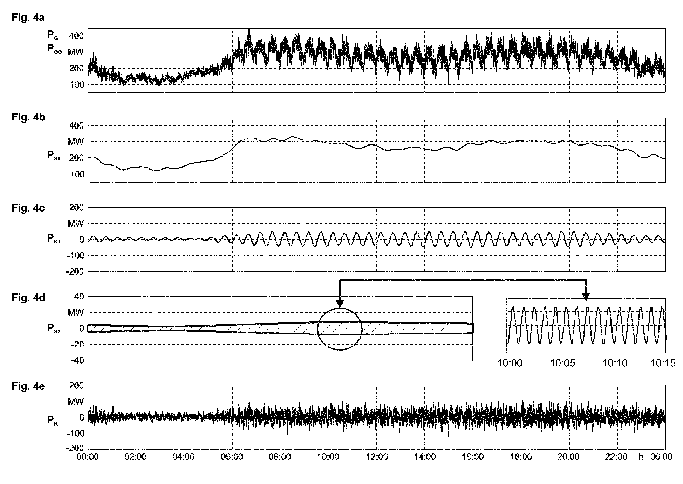

Aus dem Verlauf der Gesamtlast PG oder dem gemittelten Gesamtlastverlauf PGG werden in der Folge einzelne Verläufe von Lastkomponenten PS0, PS1, PS2 ermittelt (siehe Fig. 4b, 4c und 4d), die wesentlich zur Bildung von Lastspitzen beitragen, die in der Betriebsvorrichtung auftreten.

Der Verlauf der Grundlast entspricht dem gleitenden Mittelwert des Verlaufs der Gesamtlast PG oder des gemittelten Gesamtlastverlaufs PGG, der durch Glättung von Zeit- und Datenreihen bzw. durch das Entfernen von Signalanteilen mit höherer Frequenz gebildet wird. Vorzugsweise weist der Lastrechner RL einen Signalprozessor auf, mittels dessen ein FIR-Filter realisiert wird, dass zur Filterung des Verlaufs der gegebenenfalls gemittelten Gesamtlast PG, PGG verwendet ist.

Zur Ermittlung periodisch verlaufender Lastkomponenten PS1, PS2 wird der Verlauf der gegebenenfalls gemittelten Gesamtlast PG vorzugsweise einer Fourier-Transformation unterworfen. Alternativ können auch Bandfilter eingesetzt werden.

Die linke Seite von Fig. 2 zeigt den Verlauf der Gesamtlast PG, PGG im Zeitbereich. Auf der rechten Seite von Fig. 2 ist der Verlauf der Gesamtlast PG, PGG im Frequenzbereich dargestellt.

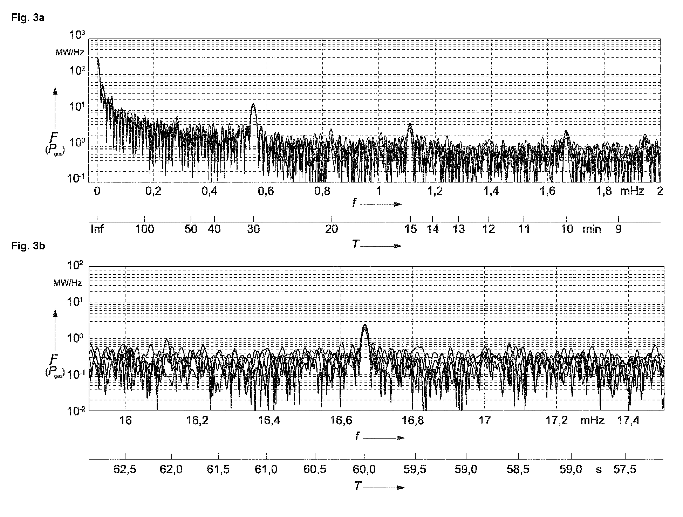

Fig. 3a zeigt die aus der Fourier-Transformation resultierenden Frequenzanteile oder Lastschwingungen mit Angabe der Amplituden, der Frequenz und der Periodendauer für Frequenzen bis 2 mHz.

Fig. 3b zeigt die aus der Fourier-Transformation resultierenden Frequenzanteile oder Lastschwingungen mit Angabe der Amplituden, der Frequenz und der Periodendauer für Frequenzen über 2 mHz.

Auf der Abszisse sind die Frequenz und die Periodendauer (in Minuten bzw. Sekunden) der Lastschwingungen eingetragen. Auf der Ordinate ist die Amplitude der Lastschwingungen in Megawatt angegeben. Es ist ersichtlich, dass im Bereich der Grundlast eine Leistung von einigen 100 MW auftritt. Ferner treten Lastschwingungen mit hoher Amplitude mit Periodendauern von 1 Minute, 10 Minuten, 15 Minuten und 30 Minuten auf. Nachfolgend werden vereinfacht nur die Lastschwingungen mit den Periodendauern von 1 Minute und 30 Minuten berücksichtigt. Diese Lastschwingungen resultieren aus dem Betriebstakt bzw. dem Taktfahrplan, mit dem die Fahrzeuge im Eisenbahnnetz verkehren.

Fig. 4a zeigt den Verlauf einer gegebenenfalls gemittelten Gesamtlast PG, PGG über 24 Stunden. Dieser Verlauf entspricht z.B. dem Verlauf der Gesamtlast PG, PGG von Fig. 1 oder Fig. 2.

Fig. 4b zeigt den aus dem Verlauf der Gesamtlast PG, PGG von Fig. 4a extrahierten Verlauf der Grundlast PS0 über 24 Stunden nach Abtrennung von Signalanteilen höherer Frequenz, z.B. Frequenzen oberhalb von 10 mHz. Wie erwähnt geht dieser Verlauf durch Filterung bzw. Mittelwertbildung aus dem Verlauf der Gesamtlast PG, PGG hervor. Dieser Verlauf wird auch als »Moving Average« bezeichnet.

Fig. 4c zeigt den Verlauf einer aus dem Verlauf der Gesamtlast PG, PGG von Fig. 4a extrahierten ersten Lastschwingung PS1 über 24 Stunden, die eine Periodendauer von 30 Minuten aufweist. Es ist ersichtlich, dass etwa ab 05:30 Uhr ein Anstieg der Amplitude dieser Lastschwingung PS1 auftritt, die einen Wert von rund 50 MW erreicht.

Fig. 4d zeigt die Hüllkurve einer aus dem Verlauf der Gesamtlast PG, PGG von Fig. 4a extrahierten zweiten Lastschwingung PS2 über 24 Stunden, die eine Periodendauer von 1 Minute aufweist, mit einer Detaildarstellung dieser Lastschwingung PS2 im Zeitbereich zwischen 10:00 Uhr und 10:15 Uhr. Diese Lastschwingung PS2 erreicht eine Amplitude von etwas mehr als 10 MW.

Fig. 4e zeigt den Verlauf des aus dem Verlauf der Gesamtlast PG, PGG von Fig. 4a extrahierten Lastrauschens PR über 24 Stunden. Es ist ersichtlich, dass dieses Lastrauschen hohe Leistungswerte erreichen kann und für das Lastmanagement daher vorzugsweise berücksichtigt wird.

Nach der Ermittlung der verschiedenen Lastkomponenten PS0, PS1, PS2 werden die zukünftigen Verläufe PS0E, PS1E, PS2E für jede der Lastkomponenten PS0, PS1, PS2 ermittelt. Es wird davon ausgegangen, dass die zukünftigen Verläufe der Lastschwingungen unverändert sind, falls sich die Rahmenbedingungen nicht ändern. Die prognostizierten Lastschwingungen PS0E, PS1E, PS2E entsprechen in diesem Fall den extrahierten Lastkomponenten PS0, PS1, PS2.

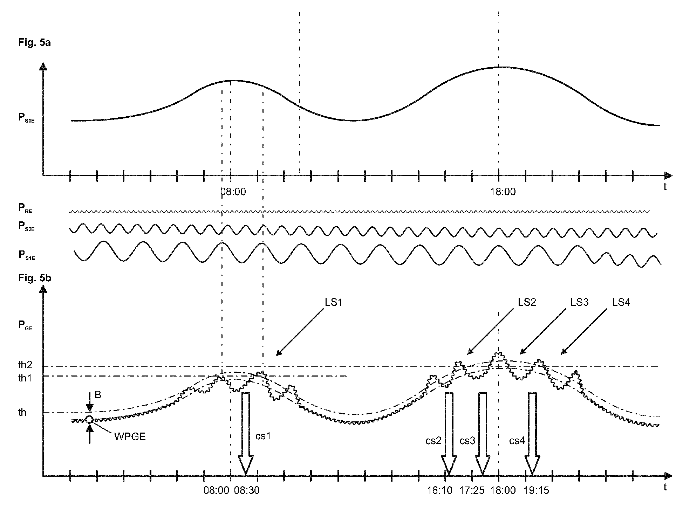

Fig. 5a zeigt schematisch den für den nächsten Tag prognostizierten Verlauf der Grundlast PS0E. Ferner sind die für den nächsten Tag prognostizierten Verläufe PS1E, PS2E und PRE der ersten beiden Lastschwingungen PS1, PS2 und des Lastrauschens PR gezeigt.

Fig. 5b zeigt schematisch die Überlagerung des prognostizierten Verlaufs der Grundlast PS0E und der prognostizierten höherfrequenten Lastschwingungen PS1E, PS2E sowie des prognostizierten Lastrauschens PRE, welche den prognostizierten Verlauf der Gesamtlast PGE bildet.

Bei der Prognostizierung des Verlaufs der Gesamtlast PGE werden vorzugsweise interne und/oder externe Einflüsse auf die Betriebsvorrichtung zusätzlich berücksichtigt. Dies kann auf verschiedene Arten geschehen. Einerseits können früher registrierte Verläufe von Gesamtlast PG zur Bildung des prognostizierten Verlaufs der Gesamtlast PGE hinzugezogen werden, bei denen vergleichbare interne und/oder externe Einflüsse vorgeherrscht haben. Alternativ können für die internen und/oder externen Einflüsse laufend Abweichungen vom prognostizierten Verlauf der Gesamtlast PGE ermittelt und bei der Bildung eines zukünftig prognostizierten Verlaufs der Gesamtlast PGE berücksichtigt werden.

Bei tieferen Temperaturen werden in der Betriebsvorrichtung üblicherweise Heizungen in Gang gesetzt, die zu einer hohen Belastung des Stromversorgungsnetzes führen. Sofern nun von einem Tag auf den anderen ein Temperatursturz prognostiziert wird, so können entweder Lastverläufe zur Bildung des Verlaufs der Gesamtlast PGE hinzugezogen werden, die bei der prognostizierten Temperatur aufgenommen wurden. Alternativ kann der Verlauf der Gesamtlast PGE gebildet und anschliessend in Abhängigkeit der vorliegenden internen oder externen Einflüsse mit einem Offset kombiniert oder mit einem Korrekturfaktor multipliziert werden.

Ebenso können Informationen zu auftretenden Störfällen gesammelt werden. Für jeden Störfall wird dabei die Auswirkung auf die Belastung der Betriebsvorrichtung untersucht. Vorzugsweise werden die Störfälle in Klassen eingeteilt, denen Belastungswerte zugeordnet sind, die bei der Prognose des Verlaufs der Gesamtlast PGE berücksichtigt werden.

Das Verfahren erlaubt daher das maschinelle Lernen zur Generierung von Wissen aus Erfahrung, das für die zukünftige Prognose des Verlaufs der Gesamtlast PGE oder PS0E angewendet werden kann. Die gesammelten Erfahrungen und die aktuellen und/oder prognostizierten Einflussgrössen können vorteilhaft auch in einem künstlichen neuronalen Netzwerk verarbeitet werden, um den Verlauf der Gesamtlast PGE oder PS0E optimal zu prognostizieren.

Der für den folgenden Tag prognostizierte Verlauf der Gesamtlast PGE erlaubt es nun, anhand von Vergleichswerten oder Schwellwerten th, th1, th2 Lastspitzen zu detektieren. Dabei können fixe Schwellwerte th1, th2 und/oder variable Schwellwerte th eingesetzt werden. Fixe Schwellwerte th1, th2 können je nach Tageszeit zugeschaltet werden. Im vorliegenden Ausführungsbeispiel wird von 00:00 Uhr bis 12:00 Uhr der tiefere erste Schwellwert th1 und von 12:00 Uhr bis 24:00 Uhr der höhere zweite Schwellwert th2 angewendet, um Lastspitzen zu detektieren. Mittels des ersten Schwellwerts th1 wird im Zeitbereich um 08:00 Uhr ein ersten Schwellwert LS1 und mittels des zweiten Schwellwerts th2 werden im Zeitbereich um 18:00 Uhr die Lastspitzen LS2, LS3 und LS4 detektiert.

Nach der Detektion der Lastspitzen LS1, ..., LS4 wird in der Folge mit einer bestimmten Vorlaufzeit je ein Steuersignal cs1, ..., cs4 erzeugt, mittels dessen Lasten bzw. Betriebseinheiten der Betriebsvorrichtung abgeschaltet werden oder der Energierechner REN des Energieversorgungssystems angesteuert wird, um die für die Lastspitzen LS1, ..., LS4 benötigte Energie bereitzustellen.

Vorzugsweise wird ein variabler oder adaptiver Schwellwert th angewendet, der in Abhängigkeit

    a) der Tageszeit, und/oder

    b) des prognostizierten Verlaufs der Gesamtlast PGE, und/oder

    c) des Energiepreises EP, und/oder

    d) der vorhandenen Energiereserven, und/oder

    e) des für diesen Zeitpunkt prognostizierten Werts WPGE der Gesamtlast PGE

gewählt wird.

Besonders vorteilhaft gelingt dies, indem der prognostizierte Verlauf der Grundlast PS0E verwendet und mit einem Offset versehen wird. Vorzugsweise wird ein Offset derart vorgesehen, dass eine Bandbreite B resultiert, innerhalb der das prognostizierte Lastrauschen PRE erfolgt.

$$\mathtt{th\ =\ WPGE\ +\ B}$$

Der Offset bzw. die Bandbreite B kann ein Produkt von mehreren Faktoren sein.

$$\mathtt{B\ =\ k\ *\ 1/EP\ *\ 1/WPGE}$$

Höhere Energiekosten und höhere Werten der prognostizierten Gesamtlast PGE führen daher vorzugsweise zu einer geringeren Bandbreite.

Bei der Verwendung eines variablen oder adaptiven Schwellwerts th können Lastspitzen LS1, ..., LS4 daher besonders einfach, präzise und vollständig erfasst werden.

Die Vorlaufzeit, mit der das Überschreiten der Schwellwerte th, th1, th2 bzw. das Auftreten von Lastspitzen LS1, ..., LS4 vom Lastrechner RL gemeldet wird, wird derart gewählt, dass die erforderlichen Massnahmen, eine Laststeuerung gegebenenfalls Lastabschaltungen oder die Bereitstellung von Energie, rechtzeitig durchgeführt werden können. Für grössere und länger dauernde Lastspitzen wird vorzugsweise eine grössere Vorlaufzeit gewählt.

Vorzugsweise wird die Wahl der Massnahmen von der Art der Lastspitzen LS1, ..., LS4 abhängig gemacht. Dabei wird vorgesehen, dass für eine kürzere Dauer von Lastspitzen Massnahmen ergriffen werden, z.B. die Abschaltung von Heizungen, die zu keinen Eingriffen in den Betriebsablauf führen. Vorzugsweise wird erst bei sehr hohen Lastspitzen und lange andauernden Lastspitzen in den Bahnbetrieb eingegriffen.

Fig. 6a zeigt das Eisenbahnnetz BN, aus dem Lastdaten einem Lastrechner RL zugeführt werden, der Daten mit einem Betriebsrechner RBN, einem Planungsrechner RP und einem Energierechner REN austauscht. Die Lastdaten können dem Lastrechner RL vom Betriebsrechner RBN oder vom Energierechner REN zugeführt werden.

Fig. 6b zeigt den bis etwa 10:30 Uhr registrierten Verlauf der Gesamtlast des Eisenbahnnetzes BN, aus dem in Echtzeit die Phasenlagen und/oder die Amplituden oder Leistungen der Grundlast PS0 gemäss Fig. 4b und der relevanten Lastschwingungen PS1, PS2 gemäss Fig. 4c und Fig. 4d sowie die Amplitude oder Leistung des Lastrauschens PR gemäss Fig. 4e ermittelt werden, um Korrekturmassnahmen einleiten zu können. Sofern innerhalb der Betriebsvorrichtung bzw. des Eisenbahnnetzes Taktverschiebungen auftreten, Amplituden einzelner Lastkomponenten PS0, PS1, PS2 sich ändern, oder ein höheres Lastrauschen PR auftritt, wird dies frühzeitig erkannt, sodass der prognostizierte Verlauf der Gesamtlast PGE korrigiert werden kann bzw. ein korrigierter prognostizierte Verlauf der Gesamtlast PGEK gebildet werden kann. Da sich die Lastspitzen bei einer gegenseitigen Verschiebung der Lastkomponenten PS1, PS2 signifikant ändern können, erlaubt dies eine weitere wichtige Präzisierung der Lastmanagementmassnahmen.

Die Laststeuerung bzw. die Steuerung der Betriebseinheiten zur Reduktion oder Vermeidung prognostizierter Lastspitzen erfolgt zentral oder dezentral. Der Lastrechner RL teilt dem Betriebsrechner RBN z.B. die Grösse und Länge der Lastspitzen mit, wonach der Betriebsrechner RBN stationäre oder mobile Betriebseinheiten BNE ermittelt, die erfindungsgemäss gesteuert werden sollen. Vorzugsweise sind die stationären oder mobilen Betriebseinheiten BNE dafür ausgelegt, in einer von vorzugsweise mehreren Betriebsarten betrieben zu werden, in denen unterschiedliche Leistungsaufnahmen vorliegen. In diesem Fall kann der Betriebsrechner RBN einem dezentralen Rechner z.B. einem Fahrzeugrechner die gewünschte Betriebsart vorgeben, wonach der Fahrzeugrechner die unter seiner Kontrolle stehenden Betriebseinheiten BNE steuert.

Das erfindungsgemässe Verfahren zur Überwachung und Steuerung einer Betriebsvorrichtung wurde mit Bezug auf ein Eisenbahnnetz beschrieben. Betriebsvorrichtungen können jedoch beliebige Vorrichtungen umfassen, in denen elektrische Lasten, insbesondere Maschinen, betrieben werden. Das Verfahren kann in Produktionsstätten oder Anlagen eingesetzt werden, in denen periodisch höhere Lasten auftreten bzw. Prozesse periodisch ablaufen.

**Patentansprüche**

1. Verfahren zur Überwachung und Steuerung einer Betriebsvorrichtung, insbesondere einer Vorrichtung zum Betrieb von Eisenbahnen, die von einem Energieversorgungssystem gespeist wird, zur Vermeidung oder Kompensation von Lastspitzen mit einem Lastrechner (RL), dem die Daten des Verlaufs der in der Betriebsvorrichtung auftretenden Gesamtlast (PG) zugeführt werden, und der daraus einzelne Verläufe von Lastkomponenten (PS0, PS1, PS2) ermittelt, die zur Bildung von Lastspitzen beitragen, die in der Betriebsvorrichtung auftreten, wonach

   a) der zukünftige Verlauf (PS0E, PS1E, PS2E) für jede der Lastkomponenten (PS0, PS1, PS2) ermittelt wird;
   b) die für die Lastkomponenten (PS0, PS1, PS2) ermittelten zukünftigen Verläufe (PS0E, PS1E, PS2E) einander überlagert werden, um einen zukünftigen Verlauf (PGE) der Gesamtlast (PG) zu ermitteln;
   c) der zukünftige Verlauf (PGE) der Gesamtlast (PG) mit wenigstens einem Schwellwert (th1, th2) verglichen wird, um zukünftige Lastspitzen zu ermitteln, die den jeweiligen Schwellwert (th1, th2) überschreiten und
   d) vor Eintreten der prognostizierten Lastspitzen einzelne Betriebseinheiten der Betriebsvorrichtung abgeschaltet oder in der Leistungsaufnahme reduziert oder mit einer zeitlichen Verschiebung betrieben werden, um die prognostizierten Lastspitzen zu vermeiden, oder dass das Energieversorgungssystem derart gesteuert wird, dass die für die Lastspitzen benötigte Energie bereitgestellt wird.

2. Verfahren nach Anspruch 1, **dadurch gekennzeichnet, dass** Lastverläufe innerhalb mehrerer Tage registriert und einander überlagert werden, um einen gemittelten Gesamtlastverlauf (PGG) zu bestimmen.

3. Verfahren nach Anspruch 1 oder 2, **dadurch gekennzeichnet, dass** zur Ermittlung der Lastkomponenten (PS0, PS1, PS2) innerhalb des Verlaufs der Gesamtlast (PG), gegebenenfalls des gemittelten Gesamtlastverlaufs (PGG),

   a) rekursiv auftretende Signalanteile ermittelt werden; und/oder
   b) periodisch auftretende Signalanteile ermittelt und vorzugsweise mittels einer Fourier-Transformation aus dem gegebenenfalls gemittelten Gesamtlastverlauf (PG, PGG) extrahiert werden; und/oder
   c) die Höhe des Rauschanteils als weitere Lastkomponente (PR)ermittelt wird.

4. Verfahren nach Anspruch 3, **dadurch gekennzeichnet, dass** der Verlauf der Grundlast (PS0) durch Filterung des Verlaufs der Gesamtlast (PG), gegebenenfalls des gemittelten Gesamtlastverlaufs (PGG), ermittelt wird und/oder dass zur Ermittlung der Lastkomponenten (PS1, PS2) periodisch auftretende Signalanteile ermittelt werden, die zu Betriebstakten, wie Fahrplan-Takten, korrespondieren, mit denen die Betriebsvorrichtung bzw. das Eisenbahnnetz betrieben werden.

5. Verfahren nach einem der Ansprüche 1-4, **dadurch gekennzeichnet, dass** Daten interner Einflüsse auf den Verlauf der Gesamtlast (PG), wie Betriebsdaten der Betriebsvorrichtung, Störungsmeldungen, Fahrplandaten und Fahrplanänderungen, ausgewertet und entsprechende Belastungsänderungen ermittelt und bei der Bestimmung des zukünftigen Verlaufs (PGE) der Gesamtlast (PG) berücksichtigt werden und/oder dass Daten externer Einflüsse auf den Verlauf der Gesamtlast (PG), wie Daten und Prognosen klimatischer Einflüsse und Einflussänderungen, ermittelt, ausgewertet und entsprechende Belastungsänderungen ermittelt und bei der Bestimmung des zukünftigen Verlaufs (PGE) der Gesamtlast (PG) berücksichtigt werden.

6. Verfahren nach einem der Ansprüche 1-5, **dadurch gekennzeichnet, dass** der aktuelle Verlauf der Gesamtlast (PG) ausgewertet und die aktuellen Verläufe der Lastkomponenten (PS0, PS1, PS2) ermittelt und mit den ermittelten zukünftigen Verläufen (PS0E, PS1E, PS2E) der Lastkomponenten (PS0, PS1, PS2) verglichen werden, wonach die zukünftigen Verläufe (PS0E, PS1E, PS2E) der Lastkomponenten (PS0, PS1, PS2) entsprechend geändert und erst dann einander überlagert werden, um den zukünftigen Verlauf (PGE) der Gesamtlast (PG) zu ermitteln.

7.  Verfahren nach Anspruch 6, **dadurch gekennzeichnet, dass** Phasenverschiebungen und/oder Amplitudenänderungen der aktuellen Verläufe der Lastkomponenten (PS0, PS1, PS2) ermittelt und die zukünftigen Verläufe (PS0E, PS1E, PS2E) der Lastkomponenten (PS0, PS1, PS2) entsprechend geändert werden.

8.  Verfahren nach Anspruch 6 oder 7, **dadurch gekennzeichnet, dass** die Änderung der Höhe des Rauschanteils (PR) ermittelt und der zukünftige Verlauf (PGE) der Gesamtlast (PG) entsprechend angepasst wird, vorzugsweise proportional zur Höhe des Rauschanteils (PR) angehoben oder abgesenkt wird.

9.  Verfahren nach einem der Ansprüche 1 - 8, **dadurch gekennzeichnet, dass** für zwei oder mehrere Bereiche des zukünftigen Verlaufs (PGE) der Gesamtlast (PG) je ein Schwellwert (th, th1, th2) vorgesehen wird, um zukünftige Lastspitzen zu ermitteln, die den jeweiligen Schwellwert (th1, th2) überschreiten, wobei vorzugsweise ein dem Verlauf der Grundlast (PS0) angepasster und von diesem um einen vorzugsweise konstanten Offset beanstandeten Schwellwertverlauf (th) angewendet wird.

10.  Verfahren nach einem der Ansprüche 1 - 9, **dadurch gekennzeichnet, dass** für das Auftreten von prognostizierten Lastspitzen, welche den zugehörigen Schwellwert (th1, th2) überschreiten Steuersignale mit einer Vorlaufzeit generiert werden, die es erlaubt, vor Auftreten der Lastspitzen einzelne Betriebseinheiten der Betriebsvorrichtung oder das Energieversorgungssystem derart zu steuern, dass prognostizierte Lastspitzen vermieden werden oder die für die Lastspitzen benötigte Energie vor Eintreten der Lastspitzen bereit gestellt wird.

11.  Verfahren nach einem der Ansprüche 1 - 10, **dadurch gekennzeichnet, dass** zur Vermeidung der prognostizierten Lastspitzen der Betrieb ausgewählter Betriebseinheiten der Betriebsvorrichtung, wie Fahrzeuge des Eisenbahnnetzes, derart zeitlich verschoben werden, dass die Verläufe periodischer Lastkomponenten (PS1, PS2) in den Zeitbereichen, für die Lastspitzen prognostiziert wurden, vorzugsweise um 180° in der Phase gegeneinander verschoben werden.

12.  Verfahren nach einem der Ansprüche 1 - 10, **dadurch gekennzeichnet, dass** in den Zeitbereichen, in denen Lastspitzen prognostiziert wurden, Betriebstakte zumindest teilweise aufgehoben werden, indem wenigstens die zu einer der periodischen Lastkomponenten (PS1, PS2) korrespondierenden Betriebseinheiten mit einer gegenseitigen zeitlichen Verschiebung betrieben werden.

13.  Betriebsvorrichtung, insbesondere Vorrichtung zum Betrieb von Eisenbahnen, die von einem Energieversorgungssystem gespeist wird, mit einem Lastrechner (RL), der ein Programm aufweist, mittels dessen die Betriebsvorrichtung nach einem Verfahren gemäss einem der Ansprüche 1 - 12 überwachbar und steuerbar ist.

14.  Betriebsvorrichtung nach Anspruch 13, **dadurch gekennzeichnet, dass** der Lastrechner (RL) über Datenkanäle mit einem Betriebsrechner (RBN), mittels dessen Betriebseinheiten (BNE) der Betriebsvorrichtung steuerbar sind, und/oder mit einem Energierechner (REN) verbunden ist, mittels dessen das Energieversorgungssystem steuerbar ist.

15.  Betriebsvorrichtung nach Anspruch 13 oder 14, **dadurch gekennzeichnet, dass** der Lastrechner (RL) über Datenkanäle mit einem Planungsrechner (RP) verbunden ist, aus dem Daten, insbesondere Fahrplandaten, für den zukünftigen Betrieb der Betriebsvorrichtung abrufbar sind.

Fig. 1

Fig. 2

15.12.2014
16.12.2014
17.12.2014
18.12.2014

Gesamtlast
im
Zeitbereich

$P_G$
$P_{GG}$

$t$

Fourier-
Transformation

Gesamtlast
im
Frequenzbereich

$f$

**Fig. 3a**

**Fig. 3b**

Fig. 4a

Fig. 4b

Fig. 4c

Fig. 4d

Fig. 4e

16

**Fig. 5a**

**Fig. 5b**

**Fig. 6a**

**Fig. 6b**

Europäisches
Patentamt

European
Patent Office

Office européen
des brevets

# EUROPÄISCHER RECHERCHENBERICHT

Nummer der Anmeldung

EP 15 15 4461

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | JP H05 16808 A (TOSHIBA CORP) 26. Januar 1993 (1993-01-26) * Zusammenfassung; Abbildungen 1-11 * | 1,5-7,9, 10,13-15 | INV. B60M3/00 B61L27/00 H02J3/00 |
| X | EP 2 505 416 A1 (SIEMENS SCHWEIZ AG [CH]; SIEMENS AG [DE]) 3. Oktober 2012 (2012-10-03) | 1,13 | |
| A | * das ganze Dokument * | 2-12,14, 15 | |
| X | JP H08 34268 A (NISHINIPPON RYOKAKU TETSUDO KK; TOSHIBA CORP) 6. Februar 1996 (1996-02-06) * Zusammenfassung; Abbildungen 1-6 * | 1,5-7,9, 10,13-15 | |
| X | EP 2 799 307 A1 (TOSHIBA KK [JP]) 5. November 2014 (2014-11-05) | 1,13 | |
| A | * das ganze Dokument * | 2-12,14, 15 | |

RECHERCHIERTE SACHGEBIETE (IPC)

B60M
B61L
H02J

Der vorliegende Recherchenbericht wurde für alle Patentansprüche erstellt

| Recherchenort | Abschlußdatum der Recherche | Prüfer |
|---|---|---|
| Den Haag | 21. Juli 2015 | Bolder, Arthur |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 15 15 4461

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

21-07-2015

| Im Recherchenbericht angeführtes Patentdokument | Datum der Veröffentlichung | Mitglied(er) der Patentfamilie | Datum der Veröffentlichung |
|---|---|---|---|
| JP H0516808 A | 26-01-1993 | JP 2980418 B2<br>JP H0516808 A | 22-11-1999<br>26-01-1993 |
| EP 2505416 A1 | 03-10-2012 | EP 2505416 A1<br>WO 2012130522 A2 | 03-10-2012<br>04-10-2012 |
| JP H0834268 A | 06-02-1996 | JP 3350229 B2<br>JP H0834268 A | 25-11-2002<br>06-02-1996 |
| EP 2799307 A1 | 05-11-2014 | EP 2799307 A1<br>JP 2013132980 A<br>WO 2013099171 A1 | 05-11-2014<br>08-07-2013<br>04-07-2013 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **J. BOSCH ; J.M. ANICETO.** Potenziale für das Lastmanagement im Bahnenergiesystem. 2013

- **J. BOSCH.** Frequenzkomponenten des Bahnstromlastgangs-Zusammenhänge mit dem Bahnbetrieb. 2014